# EUROPÄISCHE PATENTSCHRIFT

(11) **EP 1 081 470 B1**
(45) Veröffentlichungstag und Bekanntmachung des Hinweises auf die Patenterteilung: **28.02.2007**
(21) Anmeldenummer: 00116376.5
(22) Anmeldetag: 28.07.2000
(51) Int. Cl.: G01F 23/296

(54) **Vorrichtung zur Messung eines Füllstandes einer Flüssigkeit in einem Behälter**
Apparatus for the measurement of liquid level in a tank
Dispositif de mesure de niveau de liquide dans un réservoir

(30) Priorität: 04.09.1999 DE 19942379
(43) Veröffentlichungstag der Anmeldung: 07.03.2001
(73) Patentinhaber: SIEMENS AKTIENGESELLSCHAFT, 80333 München (DE)
(72) Erfinder: Keller, Dieter, 63743 Aschaffenburg (DE)

(56) Entgegenhaltungen:
- WO-A-91/02950
- WO-A-98/04889
- DE-A- 3 706 453
- FR-A- 1 219 895
- US-A- 4 531 406

## Beschreibung

Die Erfindung betrifft eine Vorrichtung zur Messung eines Füllstandes einer Flüssigkeit in einem Behälter, insbesondere in einem Kraftstoffbehälter eines Kraftfahrzeuges, mit einem Ultraschallsensor zur Erzeugung von Ultraschallwellen in der Flüssigkeit und zum Empfangen der im Bereich des Flüssigkeitsspiegels im Behälter reflektierten Ultraschallwellen, und mit einer Auswerteeinheit zur Berechnung des Füllstandes der Flüssigkeit aus der Laufzeit der von dem Ultraschallsensor empfangenen Ultraschallwellen, wobei im Bodenbereich des Behälters und in einem vorgesehenen Abstand vor dem Ultraschallsensor ein Messreflektor angeordnet ist und dass die Auswerteeinheit zum Vergleich der Laufzeiten der im Bereich des Flüssigkeitsspiegels reflektierten Ultraschallwellen und der von dem Messreflektor reflektierten Ultraschallwellen gestaltet ist.

Solche Vorrichtungen werden in Kraftfahrzeugen versuchsweise eingesetzt und sind aus der Praxis bekannt. Bei der aus der Praxis bekannten Vorrichtung hat der Ultraschallsensor einen dem Innendurchmesser des Messrohrs entsprechenden Außendurchmesser und ist in einem Ende des Messrohrs eingesteckt. Das Messrohr durchdringt den Boden des Behälters und wird über Ausgleichsbohrungen mit der im Behälter vorhandenen Flüssigkeit befüllt. Zur Verstärkung der von dem Flüssigkeitsspiegel reflektierten Ultraschallwellen ist in dem Messrohr ein die Ultraschallwellen reflektierender Schwimmer angeordnet.

Nachteilig bei der bekannten Vorrichtung ist, dass die Laufzeit der reflektierten Ultraschallwellen sehr stark von der Zusammensetzung der Flüssigkeit sowie von deren Temperatur abhängig ist. Hierdurch ist insbesondere die zum Einsatz in dem Kraftstoffbehälter eines Kraftfahrzeuges vorgesehene Vorrichtung sehr ungenau, da sich die Temperatur des Kraftstoffs beispielsweise beim Nachtanken oder beim Parken in der Sonne in einem großen Bereich ändert.

Man könnte daran denken, die Temperatur in dem Behälter zu messen und die Laufzeit der Ultraschallwellen nach der Temperatur und Stoffwerten der Flüssigkeit zu korrigieren. Dies erfordert jedoch einen beträchtlichen Aufwand zur Berechnung der Füllhöhe. Weiterhin lässt sich beispielsweise beim Dieselkraftstoff eine Veränderung seiner Zusammensetzung über die Jahreszeiten oder durch Wasseraufnahme nicht ausgleichen.

Aus der DE 37 06 453 A1 ist ein Füllstandgeber mit einem Ultraschallsensor bekannt, der Ultraschallwellen für die Messstrecke und eine Referenzstrecke aussendet. Da der Ultraschallsensor gleichzeitig für beide Messstrecken sendet, ist er großflächig und damit kostenintensiv aufgebaut.

Der Erfindung liegt das Problem zugrunde, eine Vorrichtung der eingangs genannten Art so weiterzubilden, dass sie den Füllstand auch bei sich ändernder Temperatur und Zusammensetzung der Flüssigkeit besonders zuverlässig erfasst.

Dieses Problem wird erfindungsgemäß dadurch gelöst, dass der Messreflektor von einer seitlichen Stellung in den vorgesehenen Abstand vor den Ultraschallsensor bewegbar ist.

Durch diese Gestaltung lässt sich die Veränderung der Laufzeit der im Bereich des Flüssigkeitsspiegels reflektierten Ultraschallwellen durch Temperaturänderungen oder Änderungen der Zusammensetzung der Flüssigkeit nach dem Vergleich mit der Laufzeit der von dem Messreflektor reflektierten Ultraschallwellen einfach herausrechnen. Die Füllhöhe der Flüssigkeit im Behälter kann beispielsweise als Verhältnis zu dem Abstand des Ultraschallsensors von dem Messreflektor angegeben werden. Da dieses Verhältnis unabhängig von der Zusammensetzung der Flüssigkeit und deren Temperatur in dem Behälter ist, wird die Füllhöhe besonders genau bestimmt. Die Ermittlung der Laufzeit der Reflexion von dem Messreflektor und der Laufzeit der Reflexionen von dem Flüssigkeitsspiegel erfolgen hierdurch nacheinander, so dass sich die Reflexionen nicht gegenseitig beeinflussen können. Ein weiterer Vorteil dieser Gestaltung besteht darin, dass sich für beliebige Flüssigkeiten eine einzige Vorrichtung herstellen und ohne Kalibrierung montieren lässt. Dies führt insbesondere bei einer Fertigung der Vorrichtung in einer Großserie wie beispielsweise bei Kraftstoffbehältern von Kraftfahrzeugen zu sehr geringen Herstellungskosten.

Die erfindungsgemäße Vorrichtung gestaltet sich konstruktiv besonders einfach, wenn der Messreflektor einen in die vorgesehene Position bewegbaren Schieber oder eine Klappe hat. Die Bewegung des Schiebers oder der Klappe kann mechanisch, elektrisch, fluidisch oder magnetisch erfolgen.

Die erfindungsgemäße Vorrichtung gestaltet sich besonders kostengünstig, wenn der Messreflektor an einem an dem Boden des Behälters anliegenden Schwalltopf angeordnet ist. Da sich der Schwalltopf an der tiefsten Stelle des Behälters befindet, lässt sich einfach sicherstellen, dass auf der Strecke zwischen Ultraschallsensor und Messreflektor ausreichend Flüssigkeit vorhanden ist.

Störende Reflexionen lassen sich gemäß einer anderen vorteilhaften Weiterbildung der Erfindung einfach vermeiden, wenn der Ultraschallsensor an der Außenseite des Behälters befestigt und einem in dem Behälter angeordneten Messrohr gegenüberstehend angeordnet ist. Hierbei kann das Messrohr von der unteren bis zu der oberen Wandung des Behälters geführt sein oder den Messreflektor tragen.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: einen Behälter in einem Längsschnitt mit einer erfindungsgemäßen Vorrichtung, die nicht zum Gegenstand der Erfindung zählt und
- Fig.2: eine Ausführungsform der Erfindung mit einem beweglichen Messreflektor.

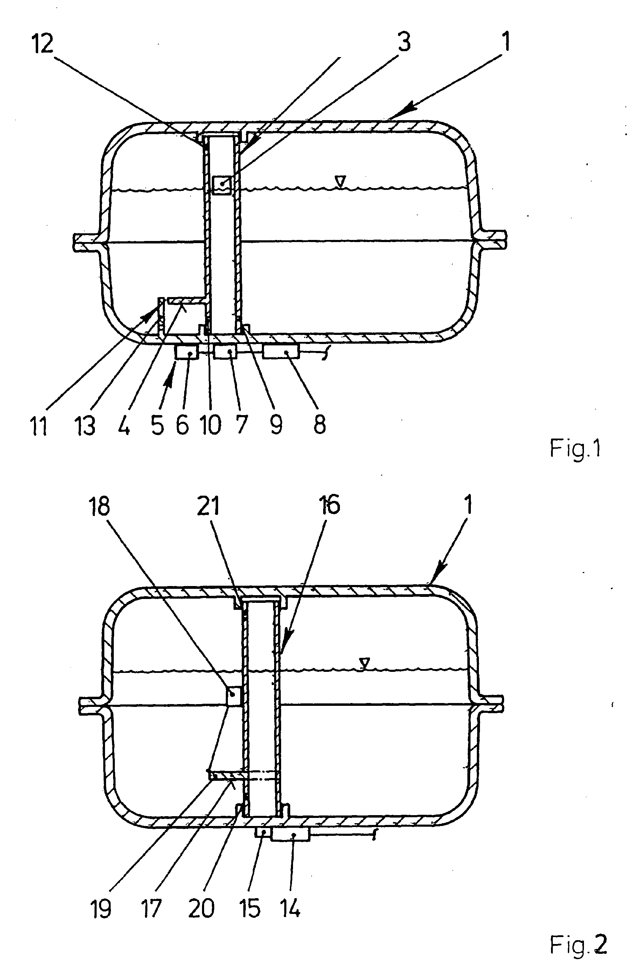

Figur 1 zeigt einen als Kraftstoffbehälter für ein Kraftfahrzeug ausgebildeten Behälter 1 mit einem darin angeordneten Messrohr 2. Das Messrohr 2 führt einen dem Flüssigkeitsspiegel folgenden Schwimmer 3 und hat einen seitlich abstehenden Messreflektor 4. An der Außenseite des Behälters 1 ist ein Ultraschallsensor 5 mit zwei Sensorelementen 6, 7 und eine Auswerteeinheit 8 befestigt. Eines der Sensorelemente 7 ist vor dem Messrohr 2 angeordnet, während das andere Sensorelement 6 dem Messreflektor 4 gegenübersteht. Die Sensorelemente 6, 7 senden Ultraschall senkrecht nach oben und empfangen die Reflexion. Der Ultraschall des einen Sensorelements 7 wird von dem Schwimmer 3 und der Ultraschall des anderen Sensorelements 6 von dem Messreflektor 4 reflektiert. Die Auswerteeinheit 8 ermittelt aus dem Verhältnis der Laufzeiten zueinander und aus dem bekannten Abstand des Messreflektors 4 den Füllstand des Kraftstoffs in dem Behälter 1. Der Füllstand lässt sich bei bekannter Behältergeometrie einfach zum Volumen des Kraftstoffs umrechnen. Der Kraftstoff kann über in dem Messrohr 2 und neben dem Messreflektor 4 angeordnete Ausgleichsöffnungen 9 - 12 in das Messrohr 2 und in den Bereich vor den Messreflektor 4 eindringen. Seitlich neben dem Messreflektor 4 hat der Behälter 1 eine senkrecht nach oben stehende Wand 13. Diese Wand 13 schirmt den Ultraschallsensor 5 vor seitlichen Reflexionen ab.

Figur 2 zeigt eine weitere Ausführungsform der erfindungsgemäßen Vorrichtung, bei der eine Auswerteeinheit 14 und ein Ultraschallsensor 15 eine bauliche Einheit bilden. Der Ultraschallsensor 15 steht einem Messrohr 16 mit einem beweglichen Messreflektor 17 gegenüber. Der Messreflektor 17 hat einen von einem Aktorelement 18 beweglichen Schieber 19. Mittels des Schiebers 19 lässt sich der Messreflektor 17 von der eingezeichneten Position außerhalb des Messrohrs 16 in eine strichpunktiert dargestellte Position innerhalb des Messrohrs 16 bewegen. Durch eine entsprechende Ansteuerung des Aktorelements 18 lässt sich wahlweise die Laufzeit der Ultraschallwellen bis zu dem Flüssigkeitsspiegel oder bis zu dem Messreflektor 17 ermitteln. Im Gegensatz zu der Ausführungsform nach Figur 1 wird hier der Ultraschall unmittelbar von dem Flüssigkeitsspiegel reflektiert. Selbstverständlich kann zusätzlich auch ein Schwimmer zur Verstärkung der Reflexion eingesetzt werden. Das Messrohr 16 hat nahe seiner Enden jeweils Ausgleichsöffnungen 20, 21 für einen Druckausgleich und Stoffausgleich mit dem übrigen Teil des Behälters 1.

## Patentansprüche

1. Vorrichtung zur Messung eines Füllstandes einer Flüssigkeit in einem Behälter, insbesondere in einem Kraftstoffbehälter eines Kraftfahrzeuges, mit einem Ultraschallsensor zur Erzeugung von Ultraschallwellen in der Flüssigkeit und zum Empfangen der im Bereich des Flüssigkeitsspiegels im Behälter reflektierten Ultraschallwellen, und mit einer Auswerteeinheit zur Berechnung des Füllstandes der Flüssigkeit aus der Laufzeit der von dem Ultraschallsensor empfangenen Ultraschallwellen, wobei im Bodenbereich des Behälters und in einem vorgesehenen Abstand vor dem Ultraschallsensor ein Messreflektor angeordnet ist und dass die Auswerteeinheit zum Vergleich der Laufzeiten der im Bereich des Flüssigkeitsspiegels reflektierten Ultraschallwellen und der von dem Messreflektor reflektierten Ultraschallwellen gestaltet ist, **dadurch gekennzeichnet, dass** der Messreflektor (17) von einer seitlichen Stellung in den vorgesehenen Abstand vor den Ultraschallsensor (15) bewegbar ist.

2. Vorrichtung nach Anspruch 1 oder 2, **dadurch gekennzeichnet, dass** der Messreflektor (17) einen in die vorgesehene Position bewegbaren Schieber (19) oder eine Klappe hat.

3. Vorrichtung nach zumindest einem der vorhergehenden Ansprüche, **dadurch gekennzeichnet, dass** der Messreflektor (24) an einem an dem Boden des Behälters (1) anliegenden Schwalltopf (27) angeordnet ist.

4. Vorrichtung nach zumindest einem der vorhergehenden Ansprüche, **dadurch gekennzeichnet , dass** der Ultraschallsensor (5, 15, 22) an der Außenseite des Behälters (1) befestigt und einem in dem Behälter (1) angeordneten Messrohr (2, 16, 23) gegenüberstehend angeordnet ist.

## Claims

1. Device for measuring a fill level of a liquid in a tank, in particular in a fuel tank of a motor vehicle, having an ultrasound sensor for generating ultrasonic waves in the liquid, and for receiving the ultrasonic waves reflected in the region of the liquid level in the tank, and having an evaluation unit for calculating the fill level of the liquid from the travel time of the ultrasonic waves received by the ultrasonic sensor, a measuring reflector being arranged in the bottom region of the tank and at an envisaged distance in front of the ultrasonic sensor, and the evaluation unit being fashioned for comparing the travel times of the ultrasonic waves reflected in the region of the liquid level and the ultrasonic waves reflected by the measuring reflector, **characterized in that** the measuring reflector (17) can be moved from a lateral position into the envisaged distance in front of the ultrasonic sensor (15).

2. Device according to Claim 1 or 2, **characterized in that** the measuring reflector (17) has a slide (19), which can be moved into the envisaged position, or a flap.

3. Device according to at least one of the preceding claims, **characterized in that** the measuring reflector (24) is arranged on a surge chamber (27) bearing against the bottom of the tank (1).

4. Device according to at least one of the preceding claims, **characterized in that** the ultrasonic sensor (5, 15, 22) is fastened on the outside of the tank (1) and is arranged opposite a measuring tube (2, 16, 23) arranged in the tank (1).

## Revendications

1. Dispositif destiné à la mesure du niveau de remplissage d'un liquide dans un réservoir, notamment dans un réservoir à carburant d'un véhicule automobile, et comportant un capteur à ultrasons, permettant de produire des ondes ultrasonores dans le liquide et de recevoir les ultrasons réfléchis dans le réservoir dans la zone de la surface du liquide, et une unité d'évaluation, permettant de calculer le niveau de remplissage du liquide à partir du temps de propagation des ultrasons reçus par le capteur à ultrasons, où, dans la zone du fond du réservoir et à une distance prévue devant le capteur à ultrasons, est disposé un réflecteur de mesure et où l'unité d'évaluation est conçue pour comparer les temps de propagation des ultrasons réfléchis dans la zone de la surface du liquide et des ultrasons réfléchis par le réflecteur de mesure, **caractérisé par le fait que** le réflecteur de mesure (17) peut être déplacé à partir d'une position latérale à la distance prévue devant le capteur à ultrasons (15).

2. Dispositif selon la revendication 1 ou 2, **caractérisé par le fait que** le réflecteur de mesure (17) a un curseur (19) ou un clapet pouvant être déplacé dans la position prévue.

3. Dispositif selon au moins l'une des revendications précédentes, **caractérisé par le fait que** le réflecteur de mesure (24) est disposé sur un pot d'accumulation (27) appliqué sur le fond du réservoir (1).

4. Dispositif selon au moins l'une des revendications précédentes, **caractérisé par le fait que** le capteur à ultrasons (5, 15, 22) est fixé sur la face extérieure du réservoir (1) et est disposé en face d'un tube de mesure (2, 16, 23) monté dans le réservoir (1).
